# EUROPÄISCHE PATENTSCHRIFT

(11) **EP 3 512 732 B1**
(45) Veröffentlichungstag und Bekanntmachung des Hinweises auf die Patenterteilung: **01.04.2020**
(21) Anmeldenummer: 17764367.3
(22) Anmeldetag: 04.09.2017
(51) Int. Cl.: B60K 7/00

(54) **HYDRAULIKSYSTEM**
HYDRAULIC SYSTEM
SYSTÈME HYDRAULIQUE

(30) Priorität: 13.09.2016 DE 102016117158
(43) Veröffentlichungstag der Anmeldung: 24.07.2019
(73) Patentinhaber: SAF-HOLLAND GmbH, 63856 Bessenbach (DE)
(72) Erfinder: HÖSSLE, Florian, 5020 Salzburg (AT); CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2017/072097
(87) Internationale Veröffentlichungsnummer: WO 2018/050468

(56) Entgegenhaltungen:
- WO-A1-2009/023931
- WO-A1-2011/079947
- US-A- 4 162 713

## Beschreibung

Die vorliegende Erfindung betrifft ein Hydrauliksystem zum Betrieb eines Zusatzantriebes sowie ein Nutzfahrzeug aufweisend ein solches Hydrauliksystem.

Hydraulisch betriebene Zusatzantriebe sind aus dem Stand der Technik an sich bekannt. Dabei hat es sich durchgesetzt, dass die Zusatzantriebe über komplett eigene Hydraulikkreisläufe, meist als geschlossener Hydraulikkreislauf ausgeführt, ausgebildet sind. Der Vorteil dieser Ansteuerung des hydraulischen Zusatzantriebes durch einen eigenen Hydraulikkreislauf ist, dass der Zusatzantrieb im Wesentlichen unabhängig von dem Hydrauliksystem des Kraftfahrzeuges betrieben werden kann. Nachteilig bei einem solchen zusätzlich am Kraftfahrzeug eingeführten Hydraulikkreislauf ist das hohe zusätzliche Gewicht sowie ein großer Steuerungsaufwand sowohl für die Pumpen als auch die hydraulischen Ventile. Insbesondere für den Fall eines Anhängers, welcher an ein Zugfahrzeug gekoppelt wird, wobei das Zugfahrzeug ein eigenes Hydrauliksystem aufweist, verursacht die zusätzliche Einrichtung eines weiteren Hydraulikkreislaufes zum Betrieb eines Zusatzantriebes eine besonders negative Zunahme des Gesamtgewichtes des Verbundes aus Zugfahrzeug und Anhänger.

Die WO 2011/079947 A1 offenbart ein Anfahrhilfssystem für Fahrzeuge. Das Anfahrhilfssystem umfasst einen ölhydraulischen Antrieb, welcher mittels eines Getriebemotors und zwei Antriebswellen die Räder eines Anhängers beim Anfahren antreibt.

Die WO 2009/023931 A1 offenbart einen motorisierten Anhänger, der mittels eines Hydraulikmotors, welche durch den Motor des Zugfahrzeuges mit Energie versorgt wird, eines Differentials und zwei Steckachsen angetrieben wird.

Die US 4 162 713 offenbart ein Planetengetriebe, welches schaltbar an einem Rad eines Fahrzeuges mit Motor durch einen Hydraulikmotor angetrieben wird.

Aufgabe der vorliegenden Erfindung ist die Bereitstellung eines leichten und mit wenigen zusätzlichen Elementen herstellbaren Hydrauliksystems, welches insbesondere für den Betrieb eines Zusatzantriebes ausgelegt ist.

Diese Aufgabe wird gelöst mit einem Hydrauliksystem gemäß Anspruch 1 sowie einem Nutzfahrzeug gemäß Anspruch 10. Weitere Vorteile und Merkmale der vorliegenden Erfindung ergeben sich aus den abhängigen Ansprüchen.

Erfindungsgemäß umfasst das Hydrauliksystem einen Zusatzantrieb, eine Hydraulikpumpe und eine erste Ventilanordnung, wobei der Zusatzantrieb in einem Betriebsmodus über die erste Ventilanordnung von der Hydraulikpumpe mit hydraulischer Energie versorgt wird, wobei die Hydraulikpumpe neben dem Zusatzantrieb zumindest ein weiteres hydraulisch betriebenes System mit hydraulischer Energie versorgt, wobei die Hydraulikpumpe an einem Zugfahrzeug angeordnet ist und wobei der Zusatzantrieb an einem, an das Zugfahrzeug koppelbaren Anhänger angeordnet ist. Das Hydrauliksystem im Sinne der vorliegenden Erfindung erstreckt sich somit vorzugsweise auf ein Zugfahrzeug und einen Anhänger, welcher an dieses Zugfahrzeug koppelbar bzw. anhängbar ist. Der Zusatzantrieb ist vorzugsweise ein hydrostatischer Motor, welcher an der Radaufhängung eines Fahrzeugrades des Anhängers anschließbar ist. Als Betriebsmodus des Zusatzantriebes wird dabei der Betriebszustand bezeichnet, in welchem der Zusatzantrieb ein Drehmoment auf das Fahrzeugrad des Anhängers überträgt. Neben dem Zusatzantrieb in dessen Betriebsmodus versorgt die Hydraulikpumpe auch zumindest ein weiteres hydraulisch betriebenes System mit hydraulischer Energie. Ein solches weiteres hydraulisch betriebenes System kann beispielsweise eine Kippvorrichtung für den Ladebereich eines Schüttgutanhängers, ein hydraulisch verschiebbarer Schubboden sowie eine hydraulisch betriebene Heckklappe sein. Mit Vorteil ist die Hydraulikpumpe dafür ausgelegt, zumindest zwei hydraulisch betriebene Systeme, das heißt den Zusatzantrieb und ein weiteres hydraulisch betriebenes System, parallel mit hydraulischer Energie zu versorgen. Die Hydraulikpumpe ist am Zugfahrzeug angeordnet und über hydraulische Leitungen mit einer ersten Ventilanordnung verbunden. Die erste Ventilanordnung leitet dabei das von der Hydraulikpumpe zur Verfügung gestellte unter Druck stehende Hydraulikfluid an den Zusatzantrieb weiter, wenn sich dieser in seinem Betriebsmodus befindet.

Bevorzugt sind der Zusatzantrieb und die Hydraulikpumpe in einem offenen Hydraulikkreis angeordnet. Ein offener Hydraulikkreis ist dadurch gekennzeichnet, dass ein Ausgleichs- oder Vorratsbehälter zur Verfügung steht. Dabei speist sich die Hydraulikpumpe aus diesem Vorratsbehälter. Zur Erhöhung des Maximaldruckes im Hydrauliksystem kann der Vorratsbehälter selbst mit einem Druck von ca. 2 bis 3 bar unter Druck gesetzt werden werden. Der Vorteil eines offenen Hydraulikkreislaufes ist, dass dieser einfach an eine verschiedene oder veränderliche Anzahl von hydraulisch betriebenen Systemen angepasst werden kann, indem einfach das Volumen von Hydraulikfluid im Vorratsbehälter oder der Vorratsbehälter selbst angepasst wird. Weiterhin kann bevorzugt auch eine Vielzahl von Vorratsbehältern sowohl am Zugfahrzeug als auch am Anhänger vorgesehen sein, um insbesondere den Bauraum im Bereich des Fahrzeuges günstig nutzen zu können.

Vorzugsweise ist im Normalbetrieb des Nutzfahrzeuges nur eine Hydraulikpumpe am Zugfahrzeug in Betrieb. Mit Vorteil ist also neben der Hydraulikpumpe des Hydraulikkreises am Zugfahrzeug keine weitere Hydraulikpumpe am Zugfahrzeug oder am Anhänger vorgesehen. Hierdurch kann insbesondere der Herstellungspreis des Hydrauliksystems und auch das Gewicht des Hydrauliksystems deutlich gesenkt werden. Mit anderen Worten betreibt die Hydraulikpumpe sämtliche im Hydrauliksystem vorgesehenen hydraulisch betriebenen Systeme, wie beispielsweise den Zusatzantrieb, eine hydraulisch betriebene Heckklappe, einen Schubboden oder die Kippfunktion an einem für Schüttgut vorgesehenen Anhänger.

Vorteilhaft ist es, wenn die erste Ventilanordnung den Zusatzantrieb und/oder ein weiteres hydraulisch betriebenes System ansteuert. Die erste Ventilanordnung ist dabei vorzugsweise ein Ventilblock, welcher die Versorgung mit hydraulischer Energie für einzelne hydraulisch betriebene Systeme steuert. Insbesondere gibt die erste Ventilanordnung dabei einen hydraulischen Fluidweg für ein bestimmtes mit dem Hydrauliksystem verbundenes hydraulisch betriebenes System frei oder blockiert diesen.

Mit Vorteil ist die erste Ventilanordnung an dem Anhänger angeordnet und festgelegt. In diesem bevorzugten Fall steuert die erste Ventilanordnung die hydraulisch betriebenen Systeme, welche am Anhänger vorgesehen sind. Ein solches hydraulisch betriebenes System ist beispielsweise eine Kippvorrichtung für einen als Schüttgutträger ausgebildeten Anhänger oder eine hydraulisch betriebene Heccklappe oder der Zusatzantrieb. Für diesen bevorzugten Fall muss am Anhänger lediglich eine Zu- und eine Ableitung für hydraulisches Fluid vorgesehen sein, um diese mit entsprechenden hydraulischen Leitungen eines Zugfahrzeuges in Verbindung bringen zu können. Auf diese Weise ist der Anhänger dafür ausgelegt, auf einfache Weise mit dem Hydrauliksystem eines Zugfahrzeuges in Verbindung gebracht zu werden und dieses für eine bevorzugte Vielzahl von hydraulisch betriebenen Systemen am Anhänger verwenden zu können.

Mit Vorteil wird die Hydraulikpumpe von einem Primärantrieb des Zugfahrzeuges mittelbar oder unmittelbar angetrieben. Als Primärantrieb des Zugfahrzeuges ist besonders bevorzugt der Hauptantriebsmotor definiert, welcher auch für den Vortrieb der Räder des Zugfahrzeuges sorgt. Die Hydraulikpumpe ist dabei vorzugsweise mechanisch über ein Getriebe mit dem Motor verbunden, wobei eine Kupplung vorgesehen sein kann, um die Hydraulikpumpe außer Betrieb zu setzen, wenn das Hydrauliksystem nicht benötigt wird. Alternativ kann die Hydraulikpumpe auch elektrisch betrieben und an die Lichtmaschine bzw. den elektrischen Stromgenerator des Zugfahrzeuges angeschlossen sein. Der Gesamtwirkungsgrad des Zugfahrzeuges kann verbessert werden, indem die Hydraulikpumpe keinen eigenen Antrieb, wie beispielsweise einen zusätzlichen Verbrennungsmotor, benötigt.

Erfindungsgemäß ist am Anhänger eine zweite Ventilanordnung vorgesehen, welche dafür ausgelegt ist, die Laufrichtung des Zusatzantriebes einzustellen. Während die erste Ventilanordnung die Versorgung des Zusatzantriebes mit hydraulischer Energie ein- oder abschaltet, ist die zweite Ventilanordnung insbesondere dafür vorgesehen, eine bestimmte Bewegungsrichtung des Zusatzantriebes einzustellen. Wie auch die erste Ventilanordnung ist die zweite Ventilanordnung vorzugsweise am Anhänger und somit in vorzugsweise unmittelbarer Nähe zum Zusatzantrieb angeordnet, um insbesondere die zwischen dem Zusatzantrieb und der zweiten Ventilanordnung zu verlegenden Hydraulikleitungen möglichst kurz zu halten. Es kann auf diese Weise wiederum das Gewicht des Hydrauliksystems reduziert werden. In einer bevorzugten Variante können auch die erste und zweite Ventilanordnung in einem gemeinsamen Ventilsystem bzw. Ventilblock vereint sein. Erfindungsgemäß sind zwei Zusatzantriebe vorgesehen und an je einer Radaufhängung des Anhängers angeordnet und festgelegt. Mit Vorteil ist also das Hydrauliksystem dafür ausgelegt, zwei Zusatzantriebe mit hydraulischer Energie zu versorgen. Dabei ist die erste und die zweite Ventilanordnung dafür ausgelegt, die beiden Zusatzantriebe entweder mit identischer hydraulischer Energie zu versorgen oder je nach Fahrt und Bewegungszustand des Anhängers einen der Antriebe mit etwas mehr hydraulischer Energie zu versorgen als den jeweils anderen, um eine Lenkbewegung des Anhängers zu erleichtern.

Mit Vorteil ist zwischen dem Zugfahrzeug und dem Anhänger eine lösbare hydraulische Kupplung vorgesehen. Besonders bevorzugt wird für diese hydraulische Kupplung dabei ein mit einfachen Handgriffen herstellbarer und lösbarer formschlüssiger Eingriff zwischen zwei hydraulischen Leitungselementen, von denen je eines am Zugfahrzeug und das jeweils andere am Anhänger angeordnet ist, hergestellt. Im einfachsten Fall des Hydrauliksystems sind dabei zwei hydraulische Kupplungen zwischen dem Zugfahrzeug und dem Anhänger vorgesehen, von denen einer die Zuleitung von Hydraulikfluid zum Anhänger steuert und die andere jeweils die Rückleitung von Hydraulikfluid zum Zugfahrzeug.

Mit Vorteil ist ein Steuergerät vorgesehen, welches zumindest die erste Ventilanordnung ansteuert. Das Steuergerät ist dabei eine Steuervorrichtung, welche dazu ausgelegt ist, elektrische oder mechanische Schaltsignale direkt oder indirekt an die Ventile der ersten Ventilanordnung zu senden, um diese zu öffnen oder zu schließen. Dabei kann das Steuergerät in unmittelbarer Nähe zur ersten Ventilanordnung verbaut sein und insbesondere bevorzugt eine mechanische Kopplung zu den Ventilen der ersten Ventilanordnung aufweisen. Das Steuergerät ist darüber hinaus vorzugsweise dafür ausgelegt, Befehlssignale zu empfangen, welche vom Anwender des Hydrauliksystems vorzugsweise vom Zugfahrzeug aus gesendet werden und ein entsprechendes Schalten der ersten Ventilanordnung beabsichtigen. Besonders bevorzugt weist das Steuergerät darüber hinaus eine Regelfunktion auf, welche Messsignale insbesondere bezüglich der Drehzahl der Fahrzeugräder oder den Bewegungszustand der weiteren hydraulisch betriebenen Systeme am Anhänger empfängt und entsprechend eine für diesen Betriebszustand optimale Schaltposition der Ventile der ersten Ventilanordnung einstellt. Mit Vorteil steuert das Steuergerät neben der ersten Ventilanordnung auch eine zweite Ventilanordnung in der vorbeschriebenen Art und Weise an.

Besonders bevorzugt ist das Steuergerät am Anhänger angeordnet und festgelegt, wobei eine elektrische Verbindung zwischen dem Zugfahrzeug und dem Steuergerät herstellbar ist. Besonders bevorzugt wird das Steuergerät also vom Zugfahrzeug mit elektrischer Energie versorgt und empfängt von hier die Befehle bzw. Steuersignale, welche eine bestimmte Steuerung der Ventile der ersten Ventilanordnung und bevorzugt auch der Ventile der zweiten Ventilanordnung vorgeben. Mit Vorteil muss somit der Anhänger keine eigene elektrische Energiequelle bereitstellen, sondern kann die elektrische Energie, welche vom Generator, insbesondere der Lichtmaschine, des Zugfahrzeuges bereitgestellt wird, nutzen.

Erfindungsgemäß ist ein Nutzfahrzeug vorgesehen, welches ein Zugfahrzeug und einen Anhänger umfasst, wobei der Anhänger mechanisch an das Zugfahrzeug gekoppelt oder koppelbar ist und wobei ein Hydrauliksystem mit den zuvor beschriebenen Merkmalen vorgesehen ist, welches im Kupplungsbereich zwischen dem Zugfahrzeug und dem Anhänger hydraulische Kupplungen aufweist. Insbesondere ein Nutzfahrzeug, welches aus einem Zugfahrzeug und einem Anhänger besteht, kann die Vorteile des erfindungsgemäßen Hydrauliksystems besonders gut ausnutzen. Mit Vorteil ist somit der bevorzugte Einsatzbereich des Hydrauliksystems an einem Nutzfahrzeug mit Zugfahrzeug und Anhänger vorgesehen.

Weitere Vorteile und Merkmale ergeben sich aus der nachfolgenden Beschreibung mit Bezug auf die beigefügte Figur.

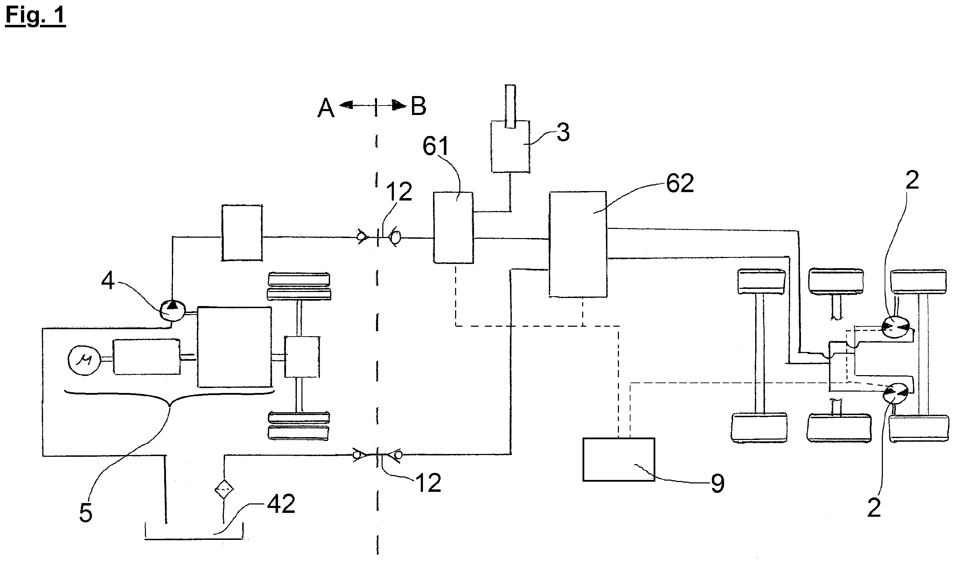

Dabei zeigt Fig. 1 ein Schema einer bevorzugten Ausführungsform eines erfindungsgemäßen Hydrauliksystems.

Fig. 1 zeigt schematisch ein Hydrauliksystem, welches sich über die grundlegenden Baugruppen Zugfahrzeug A und Anhänger B erstreckt. Im Verbindungs- bzw. Kopplungsbereich zwischen dem Zugfahrzeug A und dem Anhänger B sind hydraulische Kupplungen 12 vorgesehen. Diese sind, wie schematisch dargestellt, vorzugsweise mit Rückschlagventilen ausgestattet, um im Fall, dass die Leitungen voneinander getrennt werden, ein Entweichen des Hydraulikfluids aus einem der beiden Leitungsteile zu verhindern. Im Bereich des Zugfahrzeuges A ist die Hydraulikpumpe 4 angeordnet, welche im vorliegenden bevorzugten Ausführungsbeispiel mechanisch an das Getriebe des Primärantriebes 5 des Zugfahrzeuges A gekoppelt ist. Die Hydraulikpumpe 4 schöpft dabei hydraulische Flüssigkeit aus dem Vorratsbehälter 42, welcher vorzugsweise ebenfalls im Bereich des Zugfahrzeuges A angeordnet und festgelegt ist. Mittels des Vorratsbehälters 42 wird das Hydrauliksystem 1 als offener Hydraulikkreis ausgelegt. Im Bereich des Anhängers B ist eine erste Ventilanordnung 61 vorgesehen, welche die Versorgung verschiedener hydraulisch betriebener Systeme mit hydraulischer Energie zu- oder abschaltet. Beispielhaft ist in Fig. 1 ein zusätzliches hydraulisch betriebenes System 3 gezeigt, welches beispielsweise die Kolbenanordnung für eine Kippvorrichtung eines Nutzfahrzeuganhängers ist. Weiterhin schaltet die erste Ventilanordnung 61 auch die Versorgung des Zusatzantriebes 2 mit Hydraulikfluid an oder aus. Zwischen der ersten Ventilanordnung 61 und dem Zusatzantrieb 2 ist eine zweite Ventilanordnung 62 angeordnet, welche jeweils die Fahrtrichtung des Zusatzantriebes 2, oder der in der Figur gezeigten zwei Zusatzantriebe 2, bestimmt. Bei der in Fig. 1 gezeigten bevorzugten Ausführungsform ist somit nur eine der drei Achsen des Anhängers B mit hydraulischen Zusatzantrieben 2 ausgestattet. Es versteht sich, dass ohne größeren Aufwand auch eine zweite oder gar alle drei Achsen des Anhängers B mit hydraulischen Zusatzantrieben 2 ausgestattet werden und über die erste und die zweite Ventilanordnung 61, 62 mit Hydraulikfluid versorgt werden können. Weiterhin ist am Anhänger B vorzugsweise ein Steuergerät 9 vorgesehen, welches im bevorzugten Fall vorzugsweise sowohl die erste Ventilanordnung 61 als auch die zweite Ventilanordnung 62 mit Befehlen ansteuert. Dabei empfängt das Steuergerät vorzugsweise Signale von einem Anwender des Hydrauliksystems 1, welcher im Zugfahrzeug A sitzt. Weiterhin bevorzugt kann das Steuergerät 9 Signale von Sensoren, welche im Bereich der Zusatzantriebe 2 vorgesehen sind, empfangen und zur Beeinflussung der Steuerung der ersten und zweiten Ventilanordnung 61, 62 nutzen. Mit Vorteil empfängt und verarbeitet das Steuergerät dabei Signale eines Sensors, welcher mit Vorteil am Königszapfen zwischen Zugfahrzeug A und Anhänger B angeordnet ist und den Winkel der Längsachsen beider Teile des Gespanns misst. Darüber hinaus empfängt und verarbeitet das Steuergerät 9 mit Vorteil Signale von Sensoren die im Zugfahrzeug A angeordnet sind und beispielsweise die Drehgeschwindigkeit der Räder des Zugfahrzeugs A messen. In einer bevorzugten erweiterten Ausführung ist somit das Steuergerät 9 gleichzeitig auch ein Regelgerät, welches abhängig vom Betriebszustand des Hydrauliksystems 1 die Einstellungen an der ersten und der zweiten Ventilanordnung 61, 62 beeinflussen kann.

### Bezugszeichenliste

- 2: Zusatzantrieb
- 3: System
- 4: Hydraulikpumpe
- 5: Primärantrieb
- 9: Steuergerät
- 12: hydraulische Kupplung
- 42: Vorratsbehälter
- 61: erste Ventilanordnung
- 62: zweite Ventilanordnung
- A: Zugfahrzeug
- B: Anhänger

## Patentansprüche

1. Hydrauliksystem eines Nutzfahrzeuges bestehend aus einem Zugfahrzeug (A) und einem Anhänger (B),
umfassend einen Zusatzantrieb (2), eine Hydraulikpumpe (4) und eine erste Ventilanordnung (61),
wobei der Zusatzantrieb (2) in einem Betriebsmodus über die erste Ventilanordnung (61) von der Hydraulikpumpe (4) mit hydraulischer Energie versorgt wird, wobei die Hydraulikpumpe (4) neben dem Zusatzantrieb (2) zumindest ein weiteres hydraulisch betriebenes System (3) mit hydraulischer Energie versorgt, wobei die Hydraulikpumpe (4) an dem Zugfahrzeug (A) angeordnet ist und wobei der Zusatzantrieb (2) an dem, an das Zugfahrzeug (A) koppelbaren Anhänger (B) angeordnet ist,
wobei zwei Zusatzantriebe (2) vorgesehen sind und an je einer Radaufhängung des Anhängers (B) angeordnet und festgelegt sind,
**dadurch gekennzeichnet, dass** am Anhänger (B) eine zweite Ventilanordnung (62) vorgesehen ist, welche dafür ausgelegt ist, die Laufrichtung des Zusatzantriebes (2) einzustellen,
wobei die erste und die zweite Ventilanordnung (61, 62) dafür ausgelegt sind, die beiden Zusatzantriebe (2) entweder mit identischer hydraulischer Energie zu versorgen oder je nach Fahrt und Bewegungszustand des Anhängers (B) einen der Antriebe (2) mit mehr hydraulischer Energie zu versorgen als den jeweils anderen.

2. Hydrauliksystem nach Anspruch 1,
wobei der Zusatzantrieb (2) und die Hydraulikpumpe (4) in einem offenen Hydraulikkreis angeordnet sind.

3. Hydrauliksystem nach einem der vorhergehenden Ansprüche,
wobei im Normalbetrieb des Nutzfahrzeugs nur eine Hydraulikpumpe (4) am Zugfahrzeug (A) in Betrieb ist.

4. Hydrauliksystem nach einem der vorhergehenden Ansprüche,
wobei die erste Ventilanordnung (61) den Zusatzantrieb (2) und/oder das weitere hydraulisch betriebene System ansteuert.

5. Hydrauliksystem nach einem der vorhergehenden Ansprüche,
wobei die erste Ventilanordnung (61) an dem Anhänger (B) angeordnet und festgelegt ist.

6. Hydrauliksystem nach einem der vorhergehenden Ansprüche,
wobei die Hydraulikpumpe (4) von einem Primärantrieb (5) des Zugfahrzeugs (A) mittelbar oder unmittelbar angetrieben ist.

7. Hydrauliksystem nach einem der vorhergehenden Ansprüche,
wobei ein Steuergerät (9) vorgesehen ist, welches zumindest die erste Ventilanordnung (61) ansteuert.

8. Hydrauliksystem nach Anspruch 7,
wobei das Steuergerät (9) am Anhänger (B) angeordnet und festgelegt ist, wobei eine elektrische Verbindung zwischen dem Zugfahrzeug (A) und dem Steuergerät (9) herstellbar ist.

9. Hydrauliksystem (1) nach einem der vorhergehenden Ansprüche,
wobei zwischen dem Zugfahrzeug (A) und dem Anhänger (B) eine lösbare hydraulische Kupplung vorgesehen ist.

10. Nutzfahrzeug umfassend ein Zugfahrzeug (A) und einen Anhänger (B),
wobei der Anhänger (B) mechanisch an das Zugfahrzeug gekoppelt oder koppelbar ist,
wobei ein Hydrauliksystem (1) nach einem der vorhergehenden Ansprüche vorgesehen ist, welches im Kupplungsbereich zwischen Zugfahrzeug (A) und Anhänger (B) hydraulische Kupplungen (12) aufweist.

## Claims

1. A hydraulic system of a utility vehicle consisting of a tractor vehicle (A) and a trailer (B),
comprising an auxiliary drive (2), a hydraulic pump (4) and a first valve arrangement (61),
wherein, in an operating mode, the auxiliary drive (2) is supplied with hydraulic energy by the hydraulic pump (4) via the first valve arrangement (61),
wherein, in addition to the auxiliary drive (2), the hydraulic pump (4) supplies at least one further hydraulically operated system (3) with hydraulic energy,
wherein the hydraulic pump (4) is arranged on the tractor vehicle (A), and wherein the auxiliary drive (2) is arranged on the trailer (B), which is able to be coupled to the tractor vehicle (A),
wherein two auxiliary drives (2) are provided, and are arranged and fixed on in each case one wheel suspension of the trailer (B),
**characterized in that** a second valve arrangement (62), which is designed for setting the running direction of the auxiliary drive (2), is provided on the trailer (B),
wherein the first and second valve arrangements (61, 62) are designed either for supplying the two auxiliary drives (2) with equal hydraulic energy or, according to journey and state of movement of the trailer (B), for supplying one of the drives (2) with more hydraulic energy than the in each case other one.

2. The hydraulic system as claimed in claim 1,
wherein the auxiliary drive (2) and the hydraulic pump (4) are arranged in an open hydraulic circuit.

3. The hydraulic system as claimed in either of the preceding claims, wherein, during the normal operation of the utility vehicle, only one hydraulic pump (4) on the tractor vehicle (A) is in operation.

4. The hydraulic system as claimed in one of the preceding claims, wherein the first valve arrangement (61) actuates the auxiliary drive (2) and/or the further hydraulically operated system.

5. The hydraulic system as claimed in one of the preceding claims, wherein the first valve arrangement (61) is arranged and fixed on the trailer (B).

6. The hydraulic system as claimed in one of the preceding claims, wherein the hydraulic pump (4) is driven directly or indirectly by a primary drive (5) of the tractor vehicle (A).

7. The hydraulic system as claimed in one of the preceding claims, wherein a control unit (9) is provided, which actuates at least the first valve arrangement (61).

8. The hydraulic system as claimed in claim 7,
wherein the control unit (9) is arranged and fixed on the trailer (B),
wherein an electrical connection is able to be established between the tractor vehicle (A) and the control unit (9).

9. The hydraulic system (1) as claimed in one of the preceding claims, wherein a detachable hydraulic coupling is provided between the tractor vehicle (A) and the trailer (B).

10. A utility vehicle comprising a tractor vehicle (A) and a trailer (B), wherein the trailer (B) is mechanically coupled or able to be mechanically coupled to the tractor vehicle,
wherein a hydraulic system (1) as claimed in one of the preceding claims is provided, said hydraulic system having hydraulic couplings (12) in the coupling region between tractor vehicle (A) and trailer (B).

## Revendications

1. Système hydraulique d'un véhicule utilitaire constitué par un véhicule tracteur (A) et par une remorque (B),
comportant un entraînement supplémentaire (2), une pompe hydraulique (4) et un premier ensemble de vanne (61),
dans lequel
dans un mode de fonctionnement, l'entraînement supplémentaire (2) est alimenté en énergie hydraulique par la pompe hydraulique (4) via le premier ensemble de vanne (61),
la pompe hydraulique (4) alimente en énergie hydraulique, outre l'entraînement supplémentaire (2), au moins un autre système (3) à fonctionnement hydraulique,
la pompe hydraulique (4) est disposée sur le véhicule tracteur (A) et l'entraînement supplémentaire (2) est disposé sur la remorque (B) susceptible d'être accouplée au véhicule tracteur (A),
il est prévu deux entraînements supplémentaires (2) qui sont disposés et immobilisés chacun sur une suspension de roue respective de la remorque (B),
**caractérisé en ce que**
un second ensemble de vanne (62) est prévu sur la remorque (B), qui est conçu pour définir le sens de rotation de l'entraînement supplémentaire (2),
le premier et le second ensemble de vanne (61, 62) étant conçus pour soit alimenter les deux entraînements supplémentaires (2) en énergie hydraulique identique soit alimenter l'un des entraînements (2) en énergie hydraulique supérieure à celle de l'autre entraînement respectif, en fonction de l'état de circulation et de mouvement de la remorque (B).

2. Système hydraulique selon la revendication 1,
dans lequel
l'entraînement supplémentaire (2) et la pompe hydraulique (4) sont disposés en circuit hydraulique ouvert.

3. Système hydraulique selon l'une des revendications précédentes,
dans lequel
pendant le fonctionnement normal du véhicule utilitaire, une seule pompe hydraulique (4) est en service sur le véhicule tracteur (A).

4. Système hydraulique selon l'une des revendications précédentes,
dans lequel
le premier ensemble de vanne (61) pilote l'entraînement supplémentaire (2) et/ou l'autre système à fonctionnement hydraulique.

5. Système hydraulique selon l'une des revendications précédentes,
dans lequel
le premier ensemble de vanne (61) est disposé et immobilisé sur la remorque (B).

6. Système hydraulique selon l'une des revendications précédentes,
dans lequel
la pompe hydraulique (4) est entraînée directement ou indirectement par un entraînement primaire (5) du véhicule tracteur (A).

7. Système hydraulique selon l'une des revendications précédentes,
dans lequel
il est prévu un appareil de commande (9) qui pilote au moins le premier ensemble de vanne (61).

8. Système hydraulique selon la revendication 7,
dans lequel
l'appareil de commande (9) est disposé et immobilisé sur la remorque (B), une connexion électrique pouvant être établie entre le véhicule tracteur (A) et l'appareil de commande (9).

9. Système hydraulique (1) selon l'une des revendications précédentes,
dans lequel
un coupleur hydraulique détachable est prévu entre le véhicule tracteur (A) et la remorque (B).

10. Véhicule utilitaire comportant un véhicule tracteur (A) et une remorque (B),
dans lequel
la remorque (B) est couplée ou susceptible d'être couplée mécaniquement au véhicule tracteur,
il est prévu un système hydraulique (1) selon l'une des revendications précédentes, qui comprend des coupleurs hydrauliques (12) dans la zone de couplage entre le véhicule tracteur (A) et la remorque (B).
